# FASCICULE DE BREVET EUROPEEN

(11) **EP 2 490 526 B1**
(45) Date de publication et mention de la délivrance du brevet: **23.03.2016**
(21) Numéro de dépôt: 10785115.6
(22) Date de dépôt: 15.10.2010
(51) Int. Cl.: A01M 29/32

(54) **Dispositif du genre herse comprenant une embase et des elements pointus**
Eggenähnliche Vorrichtung mit Unterteil und scharfen Elementen
Harrow-type device including base and sharp elements

(30) Priorité: 19.10.2009 FR 0905017
(43) Date de publication de la demande: 29.08.2012
(73) Titulaire: Gioria, Franck, 17100 Saintes (FR)
(72) Inventeur: Gioria, Franck, 17100 Saintes (FR)
(74) Mandataire: Godineau, Valérie
(86) Numéro de dépôt international: PCT/FR2010/052184
(87) Numéro de publication internationale: WO 2011/048305

(56) Documents cités:
- EP-A2- 1 731 690
- CH-A5- 685 528
- DE-A1- 19 855 847
- DE-U1- 20 306 137
- DE-U1- 29 711 847
- DE-U1- 29 817 985
- FR-A1- 2 751 844
- US-A- 2 306 080
- US-A1- 2002 073 633

## Description

La présente invention concerne de manière générale les dispositifs du genre herse.

L'invention concerne plus particulièrement un dispositif du genre herse pour dissuader notamment les volatiles de se poser sur une surface à protéger, ledit dispositif comprenant une embase destinée à être fixée sur ladite surface à protéger, et des éléments pointus, du genre pointes ou dents, en saillie de l'embase. Ledit dispositif comprend un corps formé par un profilé de type cornière, à section transversale en forme générale de L, l'une des branches du L formant ladite embase. Lesdits éléments pointus sont formés d'une seule pièce avec l'autre branche du L, dite branche répulsive, et sont ménagés le long du bord longitudinal libre de ladite branche répulsive.

Les volatiles se posent volontiers sur les surfaces d'appui, même les plus étroites, qu'ils trouvent sur les constructions. Leur présence engendre des nuisances importantes.

Pour prévenir ces nuisances, on connaît de l'état de la technique, et notamment du document FR-2.682.558, des dispositifs permettant de recouvrir les surfaces sur lesquelles le stationnement des volatiles est indésirable. Le dispositif connu comporte une embase depuis laquelle s'étendent du côté opposé à la surface à protéger, des picots dissuadant les volatiles de se poser.

Dans un tel dispositif, les éléments pointus formés par les picots sont rapportés sur l'embase. Pour assurer la fixation des picots à l'embase, des orifices sont percés au travers de l'embase pour loger lesdits picots et les y fixer par exemple par collage ou montage à force.

Une telle conception du dispositif nécessitant un système d'attache des éléments pointus à l'embase génère plusieurs problèmes. En effet, le système d'attache ne résiste pas longtemps aux chocs et pressions infligés par les corps des volatiles. En outre, l'assemblage des picots à l'embase est peu pratique et coûteux en main-d'oeuvre. Enfin, les picots se présentent sous forme de tiges que le volatile finit par tordre.

On connaît également des documents DE 29817985 U1 et US 2,306,080, un dispositif tel que décrit en introduction. Cependant, la fixation de tels dispositifs à la surface à protéger est le plus souvent réalisée par collage. Le collage nécessite de la part de l'opérateur une grande précision et de nombreuses manipulations, ce qui ne permet pas de fixer le dispositif aisément et rapidement. En outre, la fixation par collage nécessite d'utiliser un moyen supplémentaire, à savoir la colle, extérieur au dispositif et à la toiture, ce qui augmente le coût de revient du dispositif. Enfin, la fixation par collage présente une durée de vie très limitée et est source de pollution.

La présente invention a pour but de proposer un dispositif de dissuasion du genre herse de conception simplifiée et de résistance améliorée, aisément fixable sur la surface à protéger.

Un autre but de la présente invention est de proposer un dispositif et un procédé de fixation de ce dispositif sur une gouttière qui ne nécessite aucune pièce ou matière supplémentaire en dehors des pièces présentes sur la toiture, tout en offrant une fixation fiable, aisée et rapide.

A cet effet, l'invention a pour objet un dispositif du genre herse pour dissuader notamment les volatiles de se poser sur une surface à protéger, ledit dispositif comprenant une embase destinée à être fixée sur ladite surface à protéger, et des éléments pointus, du genre pointes ou dents, en saillie de l'embase, ledit dispositif comprenant un corps formé par un profilé de type cornière, à section transversale en forme générale de L, l'une des branches du L formant ladite embase, et lesdits éléments pointus étant formés d'une seule pièce avec l'autre branche du L, dite branche répulsive, lesdits éléments pointus étant ménagés le long du bord longitudinal libre de ladite branche répulsive, caractérisé en ce que ledit corps présente au moins un, de préférence des, orifice(s) traversant(s) pour le passage d'organe(s) permettant de maintenir le dispositif contre la surface à protéger.

Il est ainsi possible de fixer le dispositif, selon l'invention, à la surface à protéger de manière mécanique, ce qui rend l'assemblage solide et fiable et permet d'éviter l'utilisation de colle. Comme détaillé ci-après, la fixation du dispositif à une gouttière de toiture peut s'effectuer sans pièce supplémentaire autre que celles présentes initialement sur le toit.

En outre, grâce à la réalisation du corps principal du dispositif répulsif sous forme d'une cornière, la conception du dispositif est simplifiée et peu coûteuse. En effet, la partie répulsive du corps est formée d'une seule pièce avec la partie formant embase grâce à l'utilisation d'un profilé de type cornière. Il n'est donc pas nécessaire de prévoir de rapporter des picots dans l'embase par collage ou montage à force, ce qui simplifie la conception du dispositif et améliore sa solidité.

Enfin, une telle conception du dispositif selon l'invention, consomme peu de matière et permet de n'utiliser qu'un seul matériau. Une telle conception du dispositif selon l'invention, en une seule pièce d'un même matériau, diminue également les risques de cassure et facilite la fabrication dudit dispositif.

Préférentiellement, ladite surface à protéger étant une gouttière fixée sur un toit par des bandes d'accrochage, ledit ou au moins l'un des orifices traversants est un orifice traversant allongé selon une direction sensiblement parallèle à l'axe longitudinal du corps profilé du dispositif, ledit au moins un orifice étant configuré de manière à former un passant servant au passage d'au moins une desdites bandes d'accrochage de gouttière au toit pour maintenir plaqué le corps et en particulier l'embase du dispositif contre la gouttière. Grâce à la présence du ou des passant(s) sur le dispositif selon l'invention, l'opérateur n'a besoin d'aucune pièce ou matière supplémentaire pour fixer le dispositif à la gouttière.

En effet, il suffit à l'opérateur de faire passer à travers ledit ou chaque passant du dispositif au moins une bande d'accrochage présente initialement sur la toiture pour la fixation de la gouttière au toit. Le dispositif, selon l'invention, permet ainsi de conférer à ladite bande d'accrochage une fonction supplémentaire de fixation du dispositif à la gouttière, combinée à sa fonction usuelle de fixation de la gouttière au toit.

Autrement dit, la présence d'un ou de plusieurs passants ménagés dans le dispositif permet d'utiliser une bande d'accrochage de gouttière au toit pour permettre la fixation par cette même bande d'accrochage du dispositif du genre herse à la gouttière.

De préférence, ledit ou chaque orifice traversant allongé formant passant est ménagé dans la branche répulsive au niveau de la zone de liaison entre la branche répulsive et la branche formant embase.

Le ou chaque passant forme un trou oblong présentant une longueur comprise entre 16 mm et 180 mm, de préférence 150 mm. Cette longueur définit la largeur maximale de passage de la ou des bandes.

Selon une caractéristique avantageuse de l'invention, lesdits éléments pointus se présentent sous forme de dents en triangle ménagées le long du bord longitudinal libre de la branche répulsive.

La forme triangulaire permet de former des éléments pointus solides à l'inverse des picots des dispositifs de l'état de la technique que les volatiles peuvent tordre aisément.

Selon une caractéristique avantageuse de l'invention, lesdits éléments pointus sont réalisés par découpe de la branche répulsive au niveau de son bord libre longitudinal.

La réalisation des éléments pointus par découpe permet de concevoir la partie répulsive dudit dispositif de manière simple et peu coûteuse.

Selon une caractéristique avantageuse de l'invention, ledit corps est formé par un flan plié de manière à former en section transversale, les deux branches du L.

Ainsi, un flan, de préférence métallique, suffit à former le dispositif selon l'invention par pliage en L dudit flan et de préférence découpe en dents de scie d'une des branches.

Avantageusement, ledit ou au moins l'un des orifices traversants est un orifice traversant ménagé dans l'embase pour la fixation par vissage du dispositif à la surface à protéger.

Selon une caractéristique avantageuse de l'invention, l'embase est conformée, par exemple à l'aide de plis ou de déformations, de manière à présenter un profil permettant également un montage par clipsage ou emboitement de ladite embase avec la surface à protéger.

Selon une caractéristique avantageuse de l'invention, lesdits éléments pointus sont configurés, par exemple par pliage, de manière à s'étendre pour une partie des éléments pointus, d'un côté du plan moyen de la branche répulsive du corps du dispositif et pour une autre partie des éléments pointus, de l'autre côté dudit plan moyen de la branche répulsive, les éléments pointus étant de préférence répartis de manière alternée d'un côté et de l'autre du plan moyen de la branche répulsive du corps du dispositif.

L'invention concerne également un procédé de fixation d'un dispositif, tel que décrit ci-dessus sur une gouttière accrochée à un toit par au moins une bande d'accrochage, caractérisé en ce qu'on passe ladite au moins une bande d'accrochage à travers ledit au moins un passant du dispositif pour fixer le dispositif à la gouttière et la gouttière au toit.

Selon une caractéristique avantageuse du procédé selon l'invention, le dispositif est fixé sur un rebord de la gouttière, appelé ourlet, formé par un repli du bord longitudinal libre de la gouttière du côté extérieur de ladite gouttière, ledit dispositif présentant une embase reposant sur ledit ourlet, et le procédé comprend les étapes suivantes :
- détente de ladite au moins une bande d'accrochage par rapport à la gouttière,
- passage au travers dudit au moins un passant de ladite au moins une bande d'accrochage pour maintenir plaqué le dispositif contre l'ourlet de la gouttière,
- repli ou sertissage de ladite au moins une bande d'accrochage contre l'intérieur de la gouttière pour maintenir en position le dispositif sur la gouttière.

L'invention sera bien comprise à la lecture de la description suivante d'exemples de réalisation, en référence aux dessins annexés dans lesquels :
- la figure 1 est une vue de face d'un flan découpé de manière à former un premier mode de réalisation du dispositif selon l'invention, avant pliage en L ;
- la figure 1A est une vue de détail de la zone A du flan de la figure 1 montrant un orifice allongé formant passant ;
- la figure 1 B est une vue de détail de la zone B du flan de la figure 1 montrant un orifice pour le vissage de l'embase du dispositif sur la surface à protéger ;
- la figure 2 est une vue en perspective du dispositif selon l'invention, conforme au mode de réalisation de la figure 1, avant montage sur l'ourlet d'une gouttière;
- la figure 3 est une vue du dispositif de la figure 2 au cours du passage d'une bande d'accrochage à travers un passant ménagé dans le corps du dispositif ;
- la figure 4 est une vue du dispositif de la figure 3 à l'état replié ou serti de la partie de la bande d'accrochage qui sort du passant, contre l'intérieur de la gouttière ;
- la figure 5 est une vue du dispositif selon l'invention, conformément à un deuxième mode de réalisation pour une fixation de l'embase du dispositif par clipsage sur la surface à protéger ;
- la figure 6 est une vue du dispositif selon l'invention, conformément à un troisième mode de réalisation pour une fixation de l'embase du dispositif par coulissement sur la face à protéger.

En référence aux figures et comme rappelé ci-dessus, l'invention concerne un dispositif du genre herse pour dissuader notamment les volatiles de se poser sur une surface 7 à protéger. Ledit dispositif peut être fixé sur différents types de constructions humaines, notamment gouttières, arêtes de toit, toitures, chéneaux, corniches, rebords de fenêtres, statues, faites des murs, portails, infrastructures de ponts, pylônes, mâts, etc.

Ledit dispositif comprend une embase 3 destinée à être fixée sur ladite surface 7 à protéger et des éléments pointus 9, du genre pointes ou dents, en saillie de l'embase 3 du côté opposé à la surface à protéger. Dans l'exemple illustré aux figures, ledit dispositif est fixé sur une bordure de gouttière 6, en particulier sur un ourlet 7 de gouttière comme détaillé ci-après.

Ledit dispositif comprend un corps 1 formé par un profilé de type cornière, à section transversale en forme générale de L, l'une 3 des branches 2, 3 du L formant ladite embase 3, et lesdits éléments pointus 9 étant formés d'une seule pièce avec l'autre branche 2 du L, dite branche répulsive. Lesdits éléments pointus 9 sont ménagés le long du bord longitudinal libre de ladite branche répulsive 2 et s'étendent sensiblement parallèlement à la ligne de liaison des branches 2, 3 entre elles.

Du fait de la section transversale en L de la cornière, la branche répulsive 2 s'étend sensiblement perpendiculairement à la branche 3 formant embase. Ainsi, la branche répulsive 2 s'étend en saillie de l'embase 3 fixée sur la surface à protéger, de sorte que lorsque l'embase est fixée sur une surface sensiblement horizontale les pointes des dents réparties le long du profilé sont dirigées sensiblement vers le haut.

Avantageusement, lesdits éléments pointus 9 se présentent sous forme de dents 9 en triangle ménagées le long du bord longitudinal libre de la branche répulsive 2.

Lesdits éléments pointus 9 sont configurés, par exemple par pliage, de manière à s'étendre pour une partie des éléments pointus 9, d'un côté du plan moyen de la branche répulsive 3 du corps du dispositif et pour une autre partie des éléments pointus 9, de l'autre côté dudit plan moyen de la branche répulsive 3. Les éléments pointus 9 sont répartis de manière alternée d'un côté et de l'autre du plan moyen de la branche répulsive 3 du corps du dispositif. Une telle inclinaison des éléments pointus 9 de part et d'autre du plan moyen de la branche verticale de la cornière permet d'augmenter la surface protégée. L'inclinaison dans un sens et dans l'autre des dents 9 permet en particulier d'empêcher le volatile de se poser d'un côté ou de l'autre de la branche répulsive, en particulier sur l'embase du dispositif.

Dans l'exemple illustré aux figures, ledit corps 1 est formé par un flan de préférence en matériau métallique tel qu'en zinc, en fer ou en cuivre, plié de manière à former, en section transversale, les deux branches 2, 3 du L. Lesdites branches 2, 3 s'étendent longitudinalement le long de la ligne de pliage du flan.

Lesdits éléments pointus 9 sont réalisés par découpe sensiblement en dents de scie de la branche répulsive 2 du flan au niveau de son bord libre longitudinal. Les pointes des dents délimitent le bord longitudinal libre de la branche répulsive. On peut prévoir que les pointes des dents soient émoussées pour ne pas blesser le volatile. De préférence, l'opération de découpe du flan pour former les dents est réalisée avant l'opération de pliage du flan qui permet de former les deux branches du L.

En variante, le profilé de type cornière peut être obtenu par moulage. Les dents peuvent être également obtenues par moulage ou par découpe de la branche répulsive.

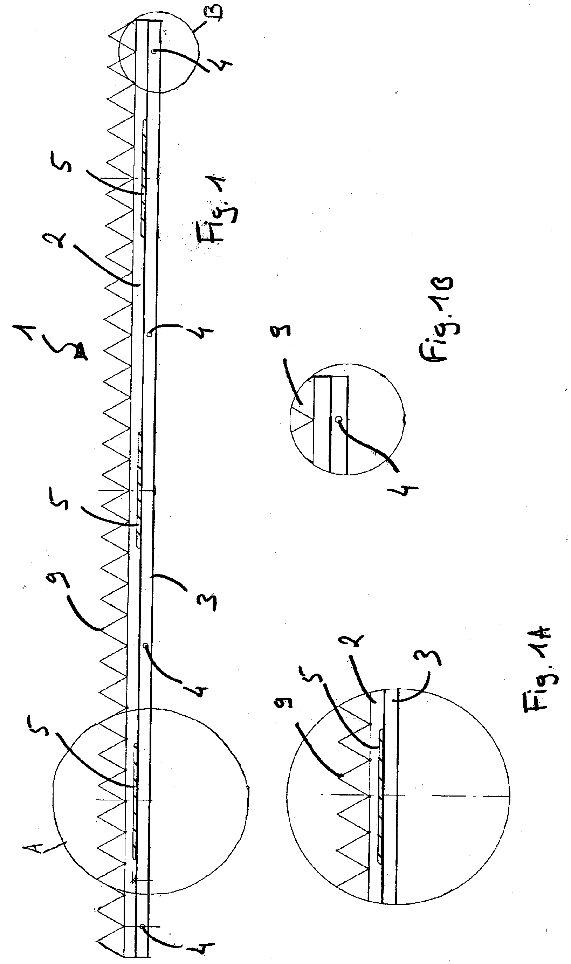

Comme illustré aux figures 1 à 4, ledit corps présente des, orifices traversants 5, 4 pour le passage d'organes permettant de maintenir le dispositif contre la surface à protéger.

Ledit dispositif comprend en particulier plusieurs orifices traversants 5 allongés selon une direction sensiblement parallèle à l'axe longitudinal du corps 1 profilé du dispositif. Lesdits orifices allongés forment passant et sont répartis le long de l'axe longitudinal du corps 1 à écartement des uns des autres pour permettre la fixation du dispositif à la surface à protéger en plusieurs positions le long du dispositif.

Ledit orifice 5 formant passant est configuré c'est-à-dire, en particulier dimensionné et conformé, de manière à pouvoir être traversé par le passage d'une bande 8 d'accrochage, servant à maintenir plaqué le corps 1 et en particulier l'embase 3 du dispositif contre la surface 7 à protéger. Une bande d'accrochage de gouttière présente une largeur standard de 15 à 30 mm. Ledit ou chaque passant présente une longueur comprise entre 16 et 180 mm, de préférence 150 mm.

Ainsi, pour une gouttière accrochée au toit à l'aide d'au moins une bande 8 d'accrochage, encore appelée crochet, formée par une bande, chaque bande 8 d'accrochage est utilisée également pour fixer le dispositif selon l'invention à la gouttière. Préférentiellement, plusieurs bandes 8 d'accrochage sont utilisées pour accrocher la gouttière au toit et chaque bande utilisée est une bande métallique cintrable formant un demi-arc de cercle fixé par exemple par vissage au toit. La bande peut être en métal ou en un autre matériau cintrable. Les bandes 8 d'accrochage écartées les unes des autres le long du toit reçoivent la gouttière et les extrémités de la bande sont repliées vers l'intérieur de la gouttière pour la maintenir en position.

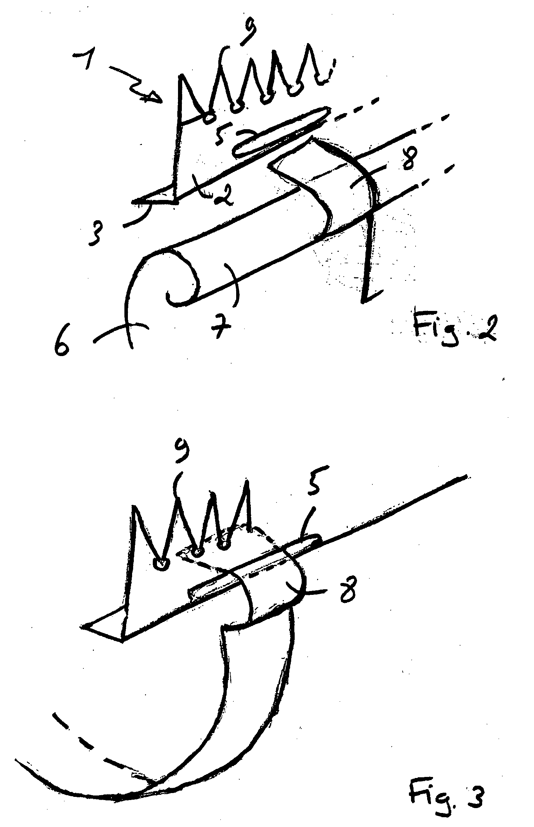

Dans le cas d'une mise en place du dispositif sur un rebord de la gouttière, appelé ourlet, formé par un repli du bord longitudinal libre de la gouttière côté extérieur de ladite gouttière, l'embase repose sur ledit ourlet. Comme illustré aux figures 2 à 4, l'installateur fixe le dispositif à l'ourlet en faisant passer une ou plusieurs bandes d'accrochage à travers le ou plusieurs passants du dispositif formés par les orifices 5. A cet effet l'écartement entre deux passants est choisi de manière à être sensiblement égal à l'écartement usuel entre deux bandes d'accrochage. L'entraxe des passants est conforme aux normes DTU pour la pose des crochets de gouttières.

En pratique, l'installateur détend la bande d'accrochage 8 par rapport à la gouttière, puis la fait passer au travers du passant 5 pour maintenir plaqué le dispositif contre l'ourlet 7 de la gouttière. La partie de bande 8 d'accrochage passée à travers l'orifice longitudinal 5 du dispositif est repliée et/ou sertie contre l'intérieur de la gouttière pour maintenir en position le dispositif sur la gouttière.

Chaque passant 5 s'étend de préférence dans la partie de la branche 2 répulsive située entre les dents 9 et la ligne de jonction avec l'embase 3 et/ou au niveau de la ligne de liaison entre les deux branches 2, 3. Dans l'exemple illustré aux figures, chaque passant 5 s'étend au niveau de la branche répulsive à proximité de la ligne de liaison entre les deux branches 2, 3.

Comme illustré aux figures 1 et 1B, le dispositif comprend également des orifices 4 traversants ménagés dans l'embase 3 de manière à permettre le passage de vis pour la fixation par vissage du dispositif 1 à la surface à protéger 7. Les orifices 4 de vissage sont écartés les uns autres selon l'axe longitudinal de dispositif.

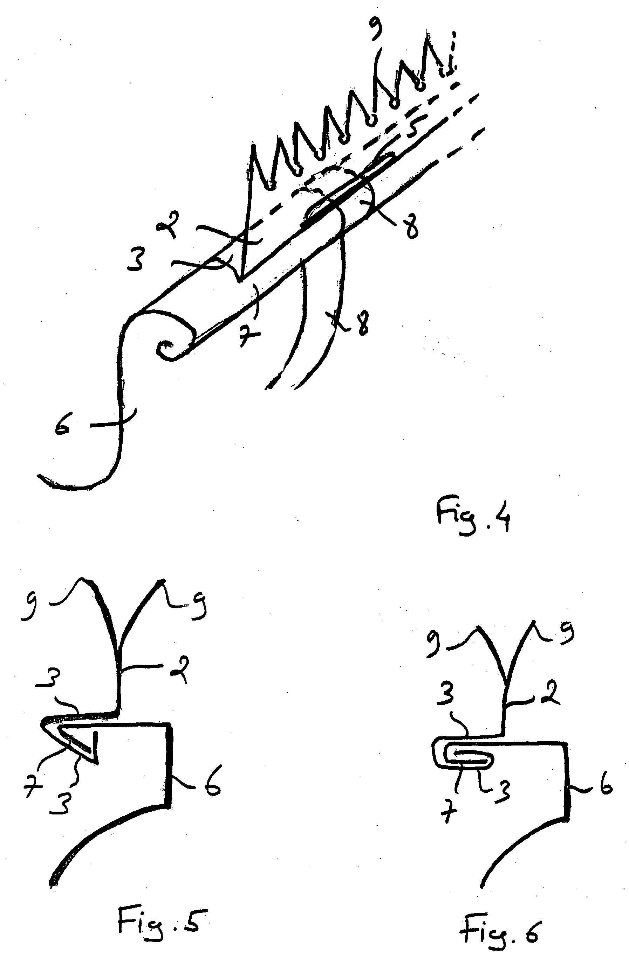

Selon un autre mode de réalisation illustré à la figure 5, on peut également prévoir de fixer le dispositif à la surface à protéger par clipsage du dispositif à ladite surface lorsque celle-ci s'y prête. L'embase 3 est conformée, par exemple à l'aide de plis ou de déformations, de manière à présenter un profil permettant un montage par clipsage ou emboitement de ladite embase 3 avec la surface 7 à protéger. Le dispositif peut en outre, ou non, présenter des orifices de fixation 4, 5 pour le passage d'une bande d'accrochage et/ou le vissage du dispositif.

Comme illustré à la figure 6, on peut prévoir que l'embase soit conformée, par exemple par pliage sur elle-même côté extérieur du L formé par ledit dispositif, de manière à pouvoir être montée par coulissement le long du bord de la surface à protéger.

On peut également prévoir de fixer l'embase du dispositif selon l'invention à la surface à protéger par soudage, rivetage ou encore par collage.

La présente invention n'est nullement limitée aux modes de réalisation décrits et représentés, mais l'homme du métier saura y apporter toute variante conforme à son esprit.

Les matériaux utilisés pour former le dispositif selon l'invention peuvent être : le zinc, le cuir, l'inox, l'acier, le PVC, l'aluminium.

Avantageusement, on prévoit d'équiper la surface à protéger d'une pluralité de dispositifs tels que décrits ci-dessus. Lesdits dispositifs peuvent en particulier être mis bout à bout pour s'étendre de manière sensiblement continue de long de la surface à protéger. En outre, on peut prévoir que lesdits dispositifs forment des éléments assemblables les uns aux autres au niveau de leurs extrémités longitudinales, par exemple par un système de clipsage ou de coulisse.

## Revendications

1. Dispositif du genre herse pour dissuader notamment les volatiles de se poser sur une surface (7) à protéger, ledit dispositif comprenant une embase (3) destinée à être fixée sur ladite surface (7) à protéger, et des éléments pointus (9), du genre pointes ou dents, en saillie de l'embase (3),
ledit dispositif comprenant un corps (1) formé par un profilé de type cornière, à section transversale en forme générale de L, l'une (3) des branches (2, 3) du L formant ladite embase (3), et lesdits éléments pointus (9) étant formés d'une seule pièce avec l'autre branche (2) du L, dite branche répulsive, lesdits éléments pointus (9) étant ménagés le long du bord longitudinal libre de ladite branche répulsive (2), ledit corps présente au moins un, de préférence des, orifice(s) traversant(s) (5, 4) pour le passage d'organe(s) permettant de maintenir le dispositif contre la surface à protéger,
**caractérisé en ce que** ladite surface à protéger étant une gouttière fixée sur un toit par des bandes d'accrochage (8), le ou au moins l'un des orifices traversants est un orifice traversant (5) allongé selon une direction sensiblement parallèle à l'axe longitudinal du corps (1) profilé du dispositif, ledit au moins un orifice traversant (5) étant configuré de manière à former un passant servant au passage d'au moins une desdites bandes d'accrochage (8), pour maintenir plaqué le corps (1) et en particulier l'embase (3) du dispositif contre la gouttière (7).

2. Dispositif selon la revendication 1, **caractérisé en ce que** ledit ou chaque orifice traversant (5) allongé formant passant est ménagé dans la branche répulsive (2) au niveau de la zone de liaison entre la branche répulsive (2) et la branche formant embase (3).

3. Dispositif selon l'une des revendications 1 ou 2, **caractérisé en ce que** ledit dispositif présente une pluralité de passants (5) répartis le long de l'axe longitudinal du corps (1) à écartement des uns des autres pour permettre la fixation du dispositif sur la gouttière en plusieurs positions le long de la gouttière.

4. Dispositif selon l'une des revendications 1 à 3, **caractérisé en ce que** ledit ou chaque passant présente une longueur comprise entre 16 mm et 180 mm, de préférence 150 mm.

5. Dispositif selon l'une des revendications précédentes, **caractérisé en ce que** lesdits éléments pointus (9) se présentent sous forme de dents (9) en triangle ménagées le long du bord longitudinal libre de la branche répulsive (2).

6. Dispositif selon l'une des revendications précédentes, **caractérisé en ce que** lesdits éléments pointus (9) sont réalisés par découpe de la branche répulsive (2) au niveau de son bord libre longitudinal.

7. Dispositif selon l'une des revendications précédentes, **caractérisé en ce que** ledit corps (1) est formé par un flan plié de manière à former en section transversale, les deux branches (2, 3) du L.

8. Dispositif selon l'une des revendications 1 à 7, **caractérisé en ce que** le ou au moins l'un des orifices traversants est un orifice (4) traversant ménagé dans l'embase (3) pour la fixation par vissage du dispositif (1) à la surface à protéger (7).

9. Dispositif selon l'une des revendications précédentes, **caractérisé en ce que** l'embase (3) est conformée, par exemple à l'aide de plis ou de déformations, de manière à présenter un profil permettant un montage par clipsage ou emboitement de ladite embase (3) avec la surface (7) à protéger.

10. Dispositif selon l'une des revendications précédentes, **caractérisé en ce que** lesdits éléments pointus (9) sont configurés, par exemple par pliage, de manière à s'étendre pour une partie des éléments pointus (9), d'un côté du plan moyen de la branche répulsive (3) du corps du dispositif et pour une autre partie des éléments pointus (9), de l'autre côté dudit plan moyen de la branche répulsive (3), les éléments pointus (9) étant de préférence répartis de manière alternée d'un côté et de l'autre du plan moyen de la branche répulsive (3) du corps du dispositif.

11. Procédé de fixation d'un dispositif selon l'une des revendications précédentes, sur une gouttière (7) accrochée à un toit par au moins une bande d'accrochage (8),
**caractérisé en ce qu'**on passe ladite au moins une bande d'accrochage (8) à travers ledit au moins un passant (5) du dispositif pour fixer le dispositif (1) à la gouttière (7) et la gouttière (7) au toit.

12. Procédé selon la revendication 11,
**caractérisé en ce que** le dispositif est fixé sur un rebord de la gouttière, appelé ourlet, formé par un repli du bord longitudinal libre de la gouttière du côté extérieur de ladite gouttière, ledit dispositif présentant une embase reposant sur ledit ourlet,
et **en ce que** le procédé comprend les étapes suivantes :
- détente de ladite au moins une bande d'accrochage (8) par rapport à la gouttière,
- passage au travers dudit au moins un passant (5) de ladite au moins une bande d'accrochage (8) pour maintenir plaqué le dispositif contre l'ourlet de la gouttière,
- repli ou sertissage de ladite au moins une bande d'accrochage (8) contre l'intérieur de la gouttière pour maintenir en position le dispositif sur la gouttière.

## Patentansprüche

1. Eggenähnliche Vorrichtung, die verhindert, dass sich vor allem von Schwebstoffe auf einer zu schützenden Fläche (7) absetzen, wobei die Vorrichtung ein Unterteil (3) zur Befestigung auf der zu schützenden Fläche (7) und scharfe Elemente (9) in der Art von Spitzen oder Zähnen umfass, die aus dem Unterteil (3) hervorstehen,
wobei die Vorrichtung einen Körper (1) umfasst, der von einem Profil vom Typ Winkel mit einem Querschnitt in allgemeiner L-Form gebildet ist, wobei einer (3) der Schenkel (2, 3) des L das Unterteil (3) bildet und die scharfen Elemente (9) von einem einzigen Teil mit dem anderen Schenkel (2) des L, als abweisender Schenkel bezeichnet, gebildet sind, wobei die scharfen Elemente (9) entlang des freien Längsrands des abweisenden Schenkels (2) ausgebildet sind, wobei der Körper mindestens eine Öffnung, vorzugsweise durchgängige Öffnungen (5, 4) für den Durchgang von (einem) Organ(en) aufweist, das/die erlaubt/erlauben, die Vorrichtung auf der zu schützenden Fläche zu halten,
**dadurch gekennzeichnet, dass** die zu schützende Fläche eine Rinne ist, die auf einem Dach mit Befestigungsbändern (8) befestigt ist, wobei die oder mindestens eine der durchgängigen Öffnungen eine in einer zur Längsachse des Profilkörpers (1) der Vorrichtung etwa parallelen Richtung längliche durchgängige Öffnung (5) ist, wobei die mindestens eine durchgängige Öffnung (5) derart konfiguriert ist, dass ein Durchgang gebildet wird, der für den Durchgang von mindestens einem der Befestigungsbänder (8) dient, um den Körper (1) und insbesondere das Unterteil (3) der Vorrichtung an der Rinne (7) angedrückt zu halten.

2. Vorrichtung nach Anspruch 2, **dadurch gekennzeichnet, dass** die oder jede einen Durchgang bildende längliche durchgängige Öffnung (5) im abweisenden Schenkel (2) im Bereich der Verbindungszone zwischen dem abweisenden Schenkel (2) und dem das Unterteil bildenden Schenkel (3) ausgebildet ist.

3. Vorrichtung nach einem der Ansprüche 1 oder 2, **dadurch gekennzeichnet, dass** die Vorrichtung eine Vielzahl von entlang der Längsachse des Körpers (1) verteilten, voneinander beabstandeten Durchgängen (5) aufweist, um die Befestigung der Vorrichtung auf der Rinne an mehreren Stellen entlang der Rinne zu erlauben.

4. Vorrichtung nach einem der Ansprüche 1 bis 3, **dadurch gekennzeichnet, dass** der oder jeder Durchgang eine Länge zwischen 16 mm und 180 mm inklusive, vorzugsweise von 150 mm, aufweist.

5. Vorrichtung nach einem der vorangehenden Ansprüche, **dadurch gekennzeichnet, dass** die scharfen Elemente (9) die Form von dreieckigen Zähnen (9) haben, die entlang des freien Längsrands des abweisenden Schenkels (2) ausgebildet sind.

6. Vorrichtung nach einem der vorangehenden Ansprüche, **dadurch gekennzeichnet, dass** die scharfen Elemente (9) durch Ausschneiden des abweisenden Schenkels (2) im Bereich seines freien Längsrands hergestellt sind.

7. Vorrichtung nach einem der vorangehenden Ansprüche, **dadurch gekennzeichnet, dass** der Körper (1) von einem Blech gebildet ist, das derart gebogen ist, dass im Querschnitt die zwei Schenkel (2, 3) des L gebildet werden.

8. Vorrichtung nach einem der Ansprüche 1 bis 7, **dadurch gekennzeichnet, dass** die Öffnung oder mindestens eine der durchgängigen Öffnungen eine durchgängige Öffnung (4) ist, die im Unterteil (3) für die Befestigung der Vorrichtung (1) durch Schrauben auf der zu schützende Fläche (7) ausgebildet ist.

9. Vorrichtung nach einem der vorangehenden Ansprüche, **dadurch gekennzeichnet, dass** das Unterteil (3) beispielsweise mit Hilfe von Falten oder Verformungen derart ausgebildet ist, dass es ein Profil aufweist, das eine Montage durch Klipsen oder Rasten des Unterteils (3) mit der zu schützenden Fläche (7) erlaubt.

10. Vorrichtung nach einem der vorangehenden Ansprüche, **dadurch gekennzeichnet, dass** die scharfen Elemente (9) beispielsweise durch Falten derart konfiguriert sind, dass sich ein Teil der scharfen Elemente (9) auf der einen Seite der mittleren Ebene des abweisenden Schenkels (3) des Körpers der Vorrichtung und ein anderer Teil der scharfen Elemente (9) auf der anderen Seite der mittleren Ebene des abweisenden Schenkels (3) erstreckt, wobei die scharfen Elemente (9) vorzugsweise alternierend auf der einen und der anderen Seite der mittleren Ebene des abweisenden Schenkels (3) des Körpers der Vorrichtung verteilt sind.

11. Verfahren zur Befestigung einer Vorrichtung nach einem der vorangehenden Ansprüche auf einer Rinne (7), die auf einem Dach mit mindestens einem Befestigungsband (8) befestigt ist,
**dadurch gekennzeichnet, dass** das mindestens eine Befestigungsband (8) durch den mindestens einen Durchgang (5) der Vorrichtung geführt wird, um die Vorrichtung (1) an der Rinne (7) und die Rinne (7) auf dem Dach zu befestigen.

12. Verfahren nach Anspruch 11,
**dadurch gekennzeichnet, dass** die Vorrichtung auf einer Kante der Rinne, die als Saum bezeichnet wird, befestigt ist, der von einem Umschlag des freien Längsrands der Rinne auf der Außenseite der Rinne gebildet ist, wobei die Vorrichtung ein Unterteil aufweist, das sich auf dem Saum abstützt,
und dass das Verfahren die folgenden Schritte aufweist:
- Entspannen des mindestens einen Befestigungsbands (8) in Bezug zur Rinne,
- Hindurchführen durch den mindestens einen Durchgang (5) des mindestens einen Befestigungsbands (8), um die Vorrichtung am Saum der Rinne angedrückt zu halten,
- Biegen oder Falzen des mindestens einen Befestigungsbands (8) gegen das Innere der Rinne, um die Vorrichtung auf der Rinne in Position zu halten.

## Claims

1. A harrow-type device in particular for dissuading winged creatures from landing on a surface (7) to be protected, said device comprising a base (3) designed to be fastened on said surface (7) to be protected, and pointed members (9), such as tips or teeth, protruding from the base (3),
said device comprising a body (1) formed by a profile of the corner type, which has a generally L-shaped cross-section, one (3) of the arms (2, 3) of the L forming said base (3), and said pointed members (9) being formed in a single piece with the other arm (2) of the L, called repellent arm (2), said body having at least one, preferably several, through orifice(s) (5, 4) for the passage of member(s) making it possible to keep the device against the surface to be protected,
**characterized in that** said surface to be protected being a gutter fastened on a roof by fastening strips (8), the or at least one of the through orifices is a through orifice (5) elongated in a direction substantially parallel to the longitudinal axis of the profiled body (1) of the device, said at least one through orifice (5) being configured so as to form a loop serving for the passage of at least one of said fastening strips (8), to keep the body (1), and in particular the base (3), of the device pressed against the gutter (7).

2. The device according to claim 1, **characterized in that** said or each elongated through orifice (5) forming a loop is arranged in the repellent arm (2) at the connecting zone between the propellant arm (2) and the base-forming arm (3).

3. The device according to one of claims 1 or 2, **characterized in that** said device has a plurality of loops (5) distributed along the longitudinal axis of the body (1) separated from one another to allow the device to be fastened on the gutter in several positions along the gutter.

4. The device according to one of claims 1 to 3, **characterized in that** said or each loop has a length comprised between 16 mm and 180 mm, preferably 150 mm.

5. The device according to one of the preceding claims, **characterized in that** said pointed members (9) assume the form of triangular teeth (9) arranged along the free longitudinal edge of the repellent arm (2).

6. The device according to one of the preceding claims, **characterized in that** said pointed members (9) are made by cutting the repellent arm (2) at its longitudinal free edge.

7. The device according to one of the preceding claims, **characterized in that** said body (1) is formed by a blank bent so as to form, in cross-section, the two arms (2, 3) of the L.

8. The device according to one of claims 1 to 7, **characterized in that** one or at least one of the through orifice(s) is a through orifice (4) arranged in the base (3) to fasten the device (1) to the surface to be protected (7) by screwing.

9. The device according to one of the preceding claims, **characterized in that** the base (3) is configured, for example using bends or deformations, so as to have a profile allowing an assembly by clipping or nesting of said base (3) with the surface (7) to be protected.

10. The device according to one of the preceding claims, **characterized in that** said pointed members (9) are configured, for example by bending, so as to extend for some of the pointed members (9), on one side of the mid-plane of the repellent arm (3) of the body of the device, and for another part of the pointed members (9), on the other side of said mid-plane of the repellent arm (3), the pointed members (9) preferably being distributed alternating on both sides of the mid-plane of the repellant arm (3) of the body of the device.

11. A method for fastening a device according to one of the preceding claims on a gutter (7) attached to a roof by at least one fastening strip (8),
**characterized in that** said at least one fastening strip (8) is passed through said at least one loop (5) of the device to fasten the device (1) to the gutter (7) and the gutter (7) to the roof.

12. The method according to claim 11,
**characterized in that** the device is fastened on a rim of the gutter, called flange, formed by a bend of the free longitudinal edge of the gutter on the other side of said gutter, said device having a base resting on said flange,
and **in that** the method comprises the following steps:
- relaxing said at least one fastening strip (8) relative to the gutter,
- passing said at least one fastening strip (8) through said at least one loop (5) to keep the device pressed against the flange of the gutter,
- bending or crimping said at least one fastening strip (8) against the inside of the gutter to keep the device in position on the gutter.
